# EUROPEAN PATENT SPECIFICATION

(11) **EP 4 161 017 B1**
(45) Date of publication and mention of the grant of the patent: **18.09.2024**
(21) Application number: 21200004.6
(22) Date of filing: 29.09.2021
(51) Int. Cl.: H04L 41/0823, H04L 41/08, H04L 43/08, H04L 41/0833, H04L 41/16

(54) **METHOD FOR OPERATING AN INTERNET-OF-THINGS SYSTEM USING AN INTERNET-OF-THINGS PERFORMANCE MANAGEMENT SYSTEM, SYSTEM FOR OPERATING AN INTERNET-OF-THINGS SYSTEM, INTERNET-OF-THINGS COMMUNICATION DEVICE FOR BEING OPERATED AS PART OF AN INTERNET-OF-THINGS SYSTEM, PROGRAM AND COMPUTER-READABLE MEDIUM**
VERFAHREN ZUM BETRIEB EINES IOT-SYSTEMS UNTER VERWENDUNG EINES IOT-LEISTUNGSMANAGEMENTSYSTEMS, SYSTEM ZUM BETRIEB EINES IOT-SYSTEMS, IOT-KOMMUNIKATIONSVORRICHTUNG ZUM BETRIEB ALS TEIL EINES IOT-SYSTEMS, PROGRAMM UND COMPUTERLESBARES MEDIUM
PROCÉDÉ DE FONCTIONNEMENT D'UN SYSTÈME D'INTERNET DES OBJETS À L'AIDE D'UN SYSTÈME DE GESTION DE PERFORMANCE D'INTERNET DES OBJETS, SYSTÈME DE FONCTIONNEMENT D'UN SYSTÈME D'INTERNET DES OBJETS, DISPOSITIF DE COMMUNICATION D'INTERNET DES OBJETS DESTINÉ À ÊTRE UTILISÉ COMME PARTIE D'UN SYSTÈME D'INTERNET DES OBJETS, PROGRAMME ET SUPPORT LISIBLE PAR ORDINATEUR

(43) Date of publication of application: 05.04.2023
(73) Proprietor: Deutsche Telekom AG, 53113 Bonn (DE)
(72) Inventor: RODRIGUEZ, Miguel, 53117 Bonn (DE); KRAUTSCHEID, Thorsten, Dr., 53842 Troisdorf-Spich (DE); HAHN, Leonie, 53639 Königswinter (DE)
(74) Representative: Schwöbel, Thilo K.

(56) References cited:
- EP-A1- 3 565 191
- WO-A1-2018/020306
- US-A1- 2018 115 885
- US-A1- 2019 280 940

## Description

### BACKGROUND

The internet-of-things loT and/or machine-to-machine (M2M) communication refers to systems typically comprising a plurality of devices or communication devices - so-called internet-of-things devices or internet-of-things communication devices - having typically network connectivity enabling the internet-of-things devices to collect, transmit, receive and/or exchange data regarding managed assets. The data are able to be used either in a central or (at least with regard to the often geographically rather dispersed internet-of-things communication devices) centralized entity or server node, or transmitted, from such centralized entity or server node, towards client devices, as part of a service or communication service (internet-of-things service) associated to the internet-of-things system. Often, internet-of-things devices are only optionally associated with a user, and instead typically represent a physical object and/or monitor its behavior, such as by using embedded sensors, actuators and/or electronics.

When setting up or designing an internet-of-things system that comprises at least a plurality of internet-of-things communication devices in a (typically existing) communication network providing radio coverage in a predetermined geographical area, a huge choice of different implementation possibilities typically exists. This is due to the possibility to use, in order to actually set up the internet-of-things system, many hundreds if not many thousands of different possible hardware alternatives regarding, typically, each and every sub-system, or modular functional block or component of the internet-of-things communication devices - such as, e.g., the types of sensors, actuators, microcontroller units, chipsets, wireless communication modules, battery units or configurations thereof, and power units. This huge choice, typically at the level of each one of these hardware components, creates an even increased number of different possibilities or different combinations how to implement such an internet-of-things system, and, hence, the need to invest substantially in the design process and the process to define a configuration of the internet-of-things communication devices that is viable in practice, i.e., in a real-life environment. Additionally, the business viability and performance of constrained, battery-powered internet-of-things communication devices are often not in the control of end-customers, service providers, or manufacturers: Often, products (i.e., internet-of-things communication devices) are designed and deployed with specific use cases in mind, which turn out not to reflect the reality that devices are ultimately exposed to. Multiple factors might impact the battery life of such devices -for instance, aspects related to the telecommunication networks on which (or within which) the devices operate, environmental effects where the devices are either statically deployed or moved into, as well as factors controlling if and how often the application communicates. Hence, there is the need to provide solutions such that the behavior of the internet-of-things communication devices is able to be adapted in a manner such as to realize or to exceed the intended battery lifetime. International Application WO2018020306 A1 relates to resource optimization executed by a network node in an Internet-of-Things (loT) system utilizing event prediction to optimize system performance and Quality of Experience (QoE). European Patent Application EP3565191 A1 relates to provisioning and managing Internet-of-Things devices over a network using device based tunneled nodes and device profiles for IoT devices,

### SUMMARY

An object of the present invention is to provide a method for efficiently operating an internet-of-things system using an internet-of-things performance management system, the internet-of-things system comprises a plurality of internet-of-things communication devices in a communication network and the internet-of-things system providing an internet-of-things service, wherein each of the internet-of-things communication devices comprises a performance management client functionality and operates according to configuration information of a respective performance vector dataset that is specifically adapted to the very internet-of-things communication device, respectively, and its respective environment or situation and/or is iteratively adapted or able to be iteratively adapted. Additionally, objects of the present invention relate to a system for operating an internet-of-things system, to an internet-of-things performance management system, and/or to an internet-of-things communication device as part of the internet-of-things system, to a program comprising a computer readable program code, and to a computer-readable medium comprising instructions which when executed help to perform an inventive method.

The object of the present invention is achieved by a method for operating an internet-of-things system using an internet-of-things performance management system according to independent claim 1.

Each of the internet-of-things communication devices is configured in some manner, i.e., acts according to a configuration, or, in other words, comprises configuration information. According to the present invention, each one of the internet-of-things communication devices comprises a performance management client functionality and operates according to configuration information of (or received by means of) a respective performance vector dataset, wherein the performance vector dataset is adapted and/or iteratively adapted (and/or able to be iteratively adapted) to the (specifically considered) internet-of-things communication device, respectively, and its respective environment or situation.

This is able to be realized, according to the present invention, by means of the specific (i.e., considered) internet-of-things communication device receiving at least one downlink performance vector dataset, and by means of transmitting, by the specific internet-of-things communication device, at least one uplink performance vector dataset towards the internet-of-things performance management system. Especially, this is realized by means of a first downlink performance vector dataset being transmitted, triggered by the internet-of-things performance management system, towards the specific internet-of-things communication device, and a first uplink performance vector dataset being transmitted, by the specific internet-of-things communication device, towards the internet-of-things performance management system.

Multiple factors might impact the battery life of such devices -for instance, aspects related to the telecommunication networks on which (or within which) the devices operate, environmental effects where the devices are either statically deployed or moved into, as well as factors controlling if and how often the application communicates. The following factors typically influence the internet-of-things communication device's performance, especially regarding the battery life:
-- 3GPP^{™} NB-loT and LTE-M network coverage quality regulates if the device uses power controlling or transmits at maximum transmit power. It also controls if messages are retransmitted, and how often.
-- 3GPP^{™} networks support different combinations of radio access technologies, as well as highly specific configurations which dictate whether certain power saving features are available, and if devices have the right to overwrite network-proposed configurations with alternative values. Hence, in different countries or networks, one and the same (type of) internet-of-things communication device might have a different performance. Mobile network operators have less flexibility to modify their network configurations without impacting their customers' business cases directly.
-- 3GPP^{™} networks are deployed across a wide range of frequency bands, often requiring devices in mobility to perform periodic, prolonged network acquisition scans that consume significant battery power.
-- The number of application messages sent from/to the devices can vary significantly. Some applications use event-triggered messages, whereas others schedule their messages at fixed or varying cadences.
-- Environmental factors, such as fluctuating temperatures, changes in population/asset density, foliage loss, precipitation, etc.; all may affect device performance in different ways - from the crystal oscillator in the wireless communication module, to the battery's chemical composition, from the frequency and payload size of application messages, to the quality of the network coverage via signal propagation losses - i.e., the received SINR and RSRP. Furthermore, the performance degradation caused by any of these factors may not evolve linearly but may instead slowly creep-in during the lifecycle of the device, increasing exponentially in a way that is often recognized when it is too late.

To counteract these risks, it is conventionally known to perform reactive and human-triggered policy changes that are able to be pushed to the considered devices via device management protocols. Furthermore, it is conventionally known to use a trained artificial intelligence or machine learning middleware that is running on constrained devices and that might identify patterns, albeit only based on locally recorded data. Both of these technologies are limited by the fact that such algorithms are a reactive, a learned response to specific local changes, and usually ignorant of wider trends happening to similar applications, similar use cases, in similar deployment environments, globally.

Hence, there is no proactive management of the devices themselves to control, (reconfigure, or steer them based on population-wide performance trends or predictive modeling based on population-wide references. There is additionally no feedback loop of field data to the devices.

Especially, the device performance management relies on, on the one hand, the performance management client functionality as part of each one of the considered internet-of-things communication devices of the internet-of-things system, and, on the other hand, minimally a performance management service, hereinafter also called PMS, executing on a service provider's internet-of-things platform, application server, edge computing node (ECN), or other.

The device performance management client (functionality), hereinafter also called PMC, executes on each constrained internet-of-things (communication) device managed by the performance management service, typically either on its microcontroller, 3GPP^{™} wireless communication module, or 3GPP^{™} communication chipset. According to the present invention, the internet-of-things performance management system (or platform) or the performance management service especially comprises:
-- an "loT Device Profile Library" (IDPL) where a "Unique Device Profile" (UDP) is configured per device, either by the service provider or the device owner;
-- multiple interfaces to "External Data Sources" (EDS), such as coverage prediction tools, crowd-sourced network quality data, drive test data, operator-provided data, regional profiles datasets (including, e.g., temperature, precipitation, foliage, asset distribution, population variations, etc.), and network profiles databases (containing 3GPP^{™} network configurations, radio frequency bands of operation, etc.).
-- an "loT Project Profile Library" (IPPL) consisting of or comprising many of quickly sortable, virtual twin-modelled projects, which cumulatively represent battery life performance assessments of a wide diversity of possible device hardware configurations, device application configurations, 3GPP^{™} networks configurations, and device deployment characteristics;
-- an "Intelligent Optimizer Algorithm" (!OA) that is able to autonomously run the virtual twin model simulation of any unique device in any unique loT System, based on the device's UDP in the IDPL and the data pulled from the EDS; it stores the result of each executed simulation in the IPPL; it is also able to compare the result of each executed simulation with any of the projects stored in the IPPL, with the aim of identifying the most optimized device configuration that is able to improve the device's battery life performance; it reverts to the PMS with this most optimized device configuration;

Especially, the PMS uses the information received from the IOA to generate device-specific "Performance Vector Datasets" (PVD), which are sent to the PMC on the Downlink (loT Platform/AS/ECN/other towards the device).

The PMC is able to use the device-specific KPIs and instruction sets received in Downlink PVD files to optimize the device's battery consumption performance. This is done by reconfiguring multiple hardware and application properties of the device (e.g. reconfigure the 3GPP^{™} wireless communication module or chipset, reconfigure the GNSS chip, reconfigure the cadence of communication, reconfigure the content of the communication, reconfigure the communication protocol(s) used, reconfigure the smart antenna tuning circuit, reconfigure the smart battery front-end circuitry, etc.).

According to the present invention, the PMC periodically inspects the hardware and application properties (of the internet-of-things communication device) for the purpose of generating and sending a PVD update back to the PMS on the Uplink (device towards loT Platform/AS/ECN/other).

Regarding the transmission of these PVD files:
-- especially, all PVD files are tagged with Quality of Information (Qol) and provenance tags and contain device-specific KPIs and instruction sets;
-- especially, all PVD files are transmitted in the Downlink or Uplink using standardized Service Layer protocols, such OMA LwM2M or ETSI oneM2M;
-- the initial PVD (or first downlink performance vector dataset) is a Downlink transmission whose contents are generated by the PMS upon the service activation of each device, as long as a unique device profile had been configured in advance for the device in the IDPL; the first downlink performance vector dataset is typically followed by the first uplink performance vector dataset, followed by a second downlink performance vector dataset, etc.;
-- the interval for Uplink PVD updates is either timer-based (a PVD timer is defined in each Downlink PVD) or event-triggered (event-based).

Upon receiving each Uplink PVD update, the PMS is able to consult the IOA, together with updates sourced from the EDS, and the IOA begins a new optimization analysis using IPPL data. The UDP in the IDPL is updated, if applicable. The PMS generates a Downlink PVD update and sends it back to the PMC.

This cycle of Downlink optimization recommendation, Uplink performance feedback, Downlink optimization recommendation, Uplink performance feedback, etc., will continue until the service is discontinued, either by the decommissioning of the device, or the setting of the PVD timer to "0". The service can be reactivated by sending an initial PVD update to the device on the downlink.

According to the present invention, it is furthermore advantageously possible and preferred that in determining the different configuration information of the second downlink performance vector dataset, the internet-of-things performance management system, an intelligent optimizer algorithm and/or a performance management service thereof, especially takes into account the performance feedback information of the first uplink performance vector dataset.

Thus, by means of providing the specific internet-of-things communication device with modified or different configuration information - transmitted by means of the second downlink performance vector dataset -, it is advantageously possible according to the present invention to arrange for a more optimized configuration of the specific internet-of-things communication device, and, hence, to a more optimized operation of this device, especially one having an improved battery behavior or an increased battery life time.

According to the present invention, it is furthermore advantageously possible and preferred that the different configuration information (of the second downlink performance vector dataset or of a subsequent downlink performance vector dataset), especially compared to the first downlink performance vector dataset, is obtained by means of the internet-of-things performance management system, especially its performance management service, using at least one of the following:
-- the internet-of-things performance management system, especially its performance management service, shares the first or subsequent uplink performance vector dataset, received in the second step from the specific internet-of-things communication device, with backend systems (such as the external data sources, the intelligent optimizer algorithm, or the IPPL), especially for key performance indicator metrics and/or the recording of transaction events,
-- the internet-of-things performance management system, especially its performance management service, obtains data from external data sources, especially at least one of coverage prediction tools, regional profiles and network profiles,
-- the internet-of-things performance management system, especially its performance management service, provides such data to the intelligent optimizer algorithm,
-- the intelligent optimizer algorithm runs a virtual twin modeling prediction simulation and models a new downlink performance vector dataset.

Thereby, it is advantageously possible according to the present invention to be able to determine the second downlink performance vector dataset such that it corresponds to an improvement compared to the first downlink performance vector dataset (i.e. results in an improved operation of the specific (considered) internet-of-things communication device.

According to the present invention, it is furthermore advantageously possible and preferred that in determining - by the internet-of-things performance management system, and especially the intelligent optimizer algorithm thereof - the configuration information of the second downlink performance vector dataset at least one of the following data sources is or are taken into consideration, in addition to taking into consideration the performance feedback information of the first uplink performance vector dataset:
-- internet-of-things project profile library, especially comprising virtual twin project data and/or a catalog of digital twins organized per internet-of-things solution or internet-of-things vertical,
-- internet-of-things device profile library
-- external data sources, especially at least one of coverage prediction tools, regional profiles and network profiles.

Hence, according to the present invention, it is advantageously possible to rely on a broad range of data sources in order to be able to optimize the internet-of-things communication device's behavior.

According to the present invention, it is furthermore advantageously possible and preferred that, regarding the specific internet-of-things communication device, the first and/or subsequent downlink performance vector dataset is or corresponds to a unique device profile, especially stored in the internet-of-things device profile library, and/or wherein, likewise regarding the specific internet-of-things communication device, the first and/or subsequent uplink performance vector dataset comprises or its data are derived from or generated in view of device-specific key performance indicators and/or instruction sets as part of the or one of the preceding downlink performance vector dataset.

According to the present invention, it is furthermore advantageously possible and preferred that regarding the specific internet-of-things communication device and a considered downlink performance vector dataset, the subsequent uplink performance vector dataset either corresponds to:
-- a timer-triggered / timer-based uplink performance vector dataset, or
-- an event-triggered / event-based uplink performance vector dataset,
wherein in case of the uplink performance vector dataset being timer-triggered, the timer interval corresponds to a timer interval as defined by a performance vector dataset timer indication being part of the considered downlink performance vector dataset, or a preceding downlink performance vector dataset.

It is thereby advantageously possible to trigger the (subsequent) uplink performance vector dataset in a flexible and meaningful manner; e.g. it is advantageously possible to avoid unnecessary performance vector dataset-traffic in case that the device configuration is considered comparatively optimal in which case an uplink performance vector dataset is triggered only in case of a deterioration of the operation (and/or the battery drain) of the considered device; but it is also possible to regularly or repeatedly or mandatorily trigger a (subsequent) uplink performance vector dataset as indicated by the (preceding) considered downlink performance vector dataset.

According to the present invention, it is furthermore preferred that the first or subsequent downlink performance vector dataset (i.e., any downlink performance vector dataset) is tied to a unique device identifier or identifier information of the internet-of-things communication device in question (i.e., the specific internet-of-things communication device).

According to the present invention, it is furthermore advantageously possible and preferred that, in a third step prior to the first step, the unique device profile is generated or created by the internet-of-things performance management system, especially its performance management service, wherein especially the unique device profile comprises at least one of the following:
the primary vertical or use case type, the device manufacturer and/or model, the device software version, the device hardware version, the wireless communication module manufacturer and/or model, the wireless communication module firmware version, the wireless communication module hardware version, the cloud provider, the battery manufacturer and/or model, including performance characteristics, the antenna manufacturer and/or model, the sensor and/or actuator manufacturer and/or model, the global navigation satellite system manufacturer and/or model, communication profile-related key performance indicators, radio access technology-related key performance indicators, power saving features-related key performance indicators, and deployment characteristics-related key performance indicators.

It is thereby advantageously possible to already start with a configuration of each specific internet-of-things communication device which is comparatively optimal or at least comparatively near to an optimal configuration.

According to the present invention, it is furthermore advantageously possible and preferred that between a considered downlink performance vector dataset being received by the specific internet-of-things communication device, and the subsequent uplink performance vector dataset being transmitted by the specific internet-of-things communication device, especially between the first step and the second step, the specific internet-of-things communication device, especially its performance management client functionality, processes the content of the considered downlink performance vector dataset, and especially sets a time according to the performance vector dataset timer indication and/or triggers a reconfiguration of parts, modules or components of the internet-of-things communication device, the latter especially comprising at least one out of the following:
-- a reconfiguration of the global navigation satellite system chip or functionality,
-- a modification of sensor properties and/or of actuator properties,
-- a modification in the cadence of sensor readings and/or actuator activations,
-- a modification in the power consumption of components, systems, or the whole device,
-- a modification of antenna tuning circuits, matching circuits and/or front-end circuitry,
-- a modification of battery circuits and/or front-end circuitry,
-- a modification of the application message structure,
-- a modification of the 3GPP^{™} power saving feature settings,
-- a modification of the frequency bands of operation,
-- a modification of network acquisition procedures for 3GPP^{™} and/or proprietary mechanisms, especially regarding scanning, network preferences, reselection timers.

It is thereby advantageously possible to influence almost all operational aspects of the internet-of-things communication device, especially those having a non-negligeable influence on battery drain.

According to the present invention, it is furthermore advantageously possible and preferred that the uplink performance vector dataset, being transmitted by the specific internet-of-things communication device to the internet-of-things performance management system, especially its performance management service, comprises at least one out of the following:
-- a battery performance metrics,
-- the current configuration of the global navigation satellite system chip or functionality,
-- current settings of sensor and/or actuator properties,
-- the current cadence of sensor readings and/or of actuator activations,
-- the current power consumption configuration of components, systems, or the whole device,
-- the current configuration of antenna tuning circuits, matching circuits in smart antenna products,
-- current configuration of battery circuits,
-- the current configuration of application message structure,
-- the current configuration of 3GPP^{™} power saving feature settings,
-- changes to the frequency bands of operation,
-- network acquisition procedures for 3GPP^{™} and/or proprietary mechanisms, especially regarding scanning, network preferences, reselection timers,
-- positioning / installation data for the device, if changed.

It is thereby advantageously possible that the internet-of-things communication device - by means of transmitting the considered uplink performance vector dataset - provides information regarding almost all of its parts or components, especially those having a non-negligeable influence on battery drain.

According to the present invention, it is furthermore advantageously possible and preferred that both the downlink performance vector datasets and the uplink performance vector datasets are transmitted, between the specific internet-of-things communication device and the internet-of-things performance management system, especially its performance management service, via an edge computing node, ECN, especially a base station entity or an eNodeB/radio base station or a gateway entity or a oneM2M middle node, and especially, at least in case of the uplink performance vector datasets, back-to-back of the next regularly scheduled app message in uplink direction.

It is thereby advantageously possible to efficiently transmit the performance vector datasets, and especially to limit the additional battery drain of the internet-of-things communication device for transmitting the uplink performance vector datasets.

The present invention also relates to a system for operating an internet-of-things system according to independent claim 11.

The present invention further relates to an internet-of-things communication device for being operated as part of an internet-of-things system according to independent claim 12.

Thereby, it is advantageously possible according to the present invention that, by means of the internet-of-things communication device, or rather by means of a plurality of internet-of-things communication devices, the internet-of-things system and/or the internet-of-things performance management system is able to be used to operate an internet-of-things system more efficiently.

Furthermore, the present invention relates to a program according to independent claim 13.

Additionally, the present invention relates to a computer-readable medium according to independent claim 14.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates an internet-of-things system comprising a communication network, as well as a plurality of internet-of-things communication devices.
Figure 2 schematically illustrates an internet-of-things performance management system and a specific internet-of-things communication device.

### DETAILED DESCRIPTION

The present invention will be described also with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g., "a", "an", "the", this includes a plural of that noun unless something else is specifically stated.

Furthermore, the terms first, second, third and the like in the description are used for distinguishing between similar elements and not necessarily for describing a sequential or chronological order. It is to be understood that the terms so used are interchangeable and that other sequences than described or illustrated are possible.

An improved method for a realistic simulation of the behavior and/or the performance of an internet-of-things system and/or for determining at least one performance indicator of a simulated internet-of-things system, using an internet-of-things simulation environment is provided.

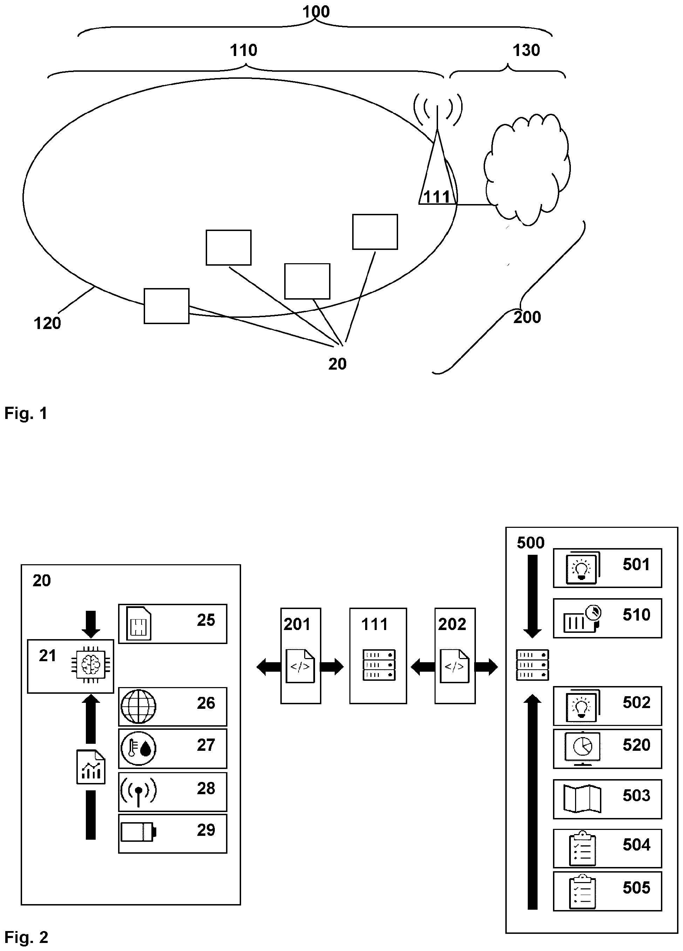

In Figure 1, an internet-of-things system 200 is schematically shown, comprising a (physical) communication network 100 as well as a plurality of internet-of-things communication devices 20. The communication network 100 is typically a cellular communication network 100, such as a public land mobile network, and is schematically represented as comprising an access network 110, and a core network 130. Exemplarily, a base station entity 111 is shown as part of the access network 110 of the communication network 100. Furthermore, a geographical area 120 is schematically shown in Figure 1, this geographical area 120 can be understood as either corresponding to a radio cell of the access network of the communication network 100, especially the radio cell 120 being served by the base station entity 111, or, alternatively, the geographical area 120 can be understood as corresponding to the total geographical area of radio coverage (typically comprising a multitude of different radio cells, in turn being served by a multitude of different base station entities, not represented in detail in Figure 1) of the communication network 100. In any case, the internet-of-things communication devices 20 of a real-world (or physical) internet-of-things system 200 are "in" the communication network 100 (or connected to the communication network 100), i.e. there is, at least intermittently, a radio communication link operational between the internet-of-things communication devices 20 and the communication network 100 (typically in the form of the corresponding access network 110, using a base station entity 111) for the transmission of internet-of-things payload data from the internet-of-things communication devices 20, respectively, to the communication network 100 and/or from the communication network 100 to the internet-of-things communication devices 20, respectively.

The internet-of-things system 200 is operated using an internet-of-things performance management system 500. This is schematically shown in Figure 2. Each one of the internet-of-things communication devices 20 (of the internet-of-things system 200) comprises a performance management client functionality 21, and especially a performance management subscription 25. Furthermore, each one of the internet-of-things communication devices 20 operates according to configuration information. According to the present invention, in order to define the configuration information of the plurality of internet-of-things communication devices 20 (of the internet-of-things system 200), performance vector datasets are used. These performance vector datasets are transmitted between a considered internet-of-things communication device 20 (represented in Figure 2 and hereinafter also called specific internet-of-things communication device 20) on the one hand, and the internet-of-things performance management system 500 (or a performance management service 520 thereof, i.e., as part of the internet-of-things performance management system 500) on the other hand. There are performance vector datasets transmitted from the (specific) internet-of-things communication device 20 towards the internet-of-things performance management system 500, i.e., in uplink direction; these are called uplink performance vector datasets. Furthermore, there are performance vector datasets transmitted from the internet-of-things performance management system 500 towards the (specific) internet-of-things communication device 20, i.e., in downlink direction; these are called downlink performance vector datasets. According to the present invention (especially for each one of the internet-of-things communication devices of the system), at least a first downlink performance vector dataset 201 is transmitted towards the specific internet-of-things communication device 20 (triggered by the internet-of-things performance management system 500), and at least a first uplink performance vector dataset 202 is transmitted, by the specific internet-of-things communication device 20, towards the internet-of-things performance management system 500. These performance vector datasets 201, 202 are schematically illustrated in Figure 2 between the specific internet-of-things communication device 20 and the internet-of-things performance management system 500 together with, schematically, a base station entity 111 of the telecommunications network 100 that is used with the internet-of-things system 200. Especially the first downlink performance vector dataset 201 (but also subsequent downlink performance vector datasets; not specifically indicated by means of a reference sign in Figure 2) is adapted to the specific internet-of-things communication device 20, and its respective environment or situation and/or is iteratively adapted or able to be iteratively adapted.

It is preferred that this adaptation is even improved by means of a subsequent downlink performance vector dataset (also called second uplink performance vector dataset): The first uplink performance vector dataset 202 comprises performance feedback information regarding the specific internet-of-things communication device 20 and its operation, which is processed by the internet-of-things performance management system 500 (especially an intelligent optimizer algorithm 510 and/or the performance management service 520 thereof). This processing triggers the second downlink performance vector dataset 201, transmitted to the specific internet-of-things communication device 20, wherein the second downlink performance vector dataset 201 comprises, compared to the first downlink performance vector dataset 201, different (especially optimized) configuration information.

It is especially preferred, according to the present invention, that the different configuration information, especially compared to the first downlink performance vector dataset 201, of the second or a subsequent downlink performance vector dataset 201 is obtained by means of the internet-of-things performance management system 500, especially its performance management service 520, using at least one of the following:
-- the internet-of-things performance management system 500, especially its performance management service 520, shares the first or subsequent uplink performance vector dataset 202, received in the second step from the specific internet-of-things communication device 20, with backend systems, especially for key performance indicator metrics and/or the recording of transaction events,
-- the internet-of-things performance management system 500, especially its performance management service 520, obtains data from external data sources 503, 504, 505, especially at least one of coverage prediction tools 503, regional profiles 504 and network profiles 505,
-- the internet-of-things performance management system 500, especially its performance management service 520, provides such data to the intelligent optimizer algorithm 510,
-- the intelligent optimizer algorithm 510 runs a virtual twin modeling prediction simulation and models a new downlink performance vector dataset (i.e. corresponding to a second downlink performance vector dataset 201 or a subsequent downlink performance vector dataset). Especially, the configuration information of the second downlink performance vector dataset 201 is determined using at least one of the following data sources (in addition to taking into consideration the performance feedback information of the first uplink performance vector dataset 202):
-- an internet-of-things project profile library 501, especially comprising virtual twin project data and/or a catalog of digital twins organized per internet-of-things solution or internet-of-things vertical,
-- an internet-of-things device profile library 502
-- external data sources 503, 504, 505, especially at least one of coverage prediction tools 503, regional profiles 504 and network profiles 505.

Especially, the first and/or subsequent downlink performance vector dataset 201 or datasets is or are (or correspond) to a unique device profile, especially stored on the internet-of-things device profile library 502. Furthermore especially, the first and/or subsequent uplink performance vector dataset 202 or datasets comprise(s), or its data are derived from or generated in view of device-specific key performance indicators and/or instruction sets as part of the or one of the preceding downlink performance vector dataset(s). Especially, the internet-of-things communication device 20 comprises a plurality of sensors and/or actuators, such as, e.g.,
-- a global navigation satellite system receiver or module, generating global navigation satellite system position data,
-- a sensor or actuator 27, e.g. regarding the temperature and/or the humidity of the internet-of-things communication device's environment, generating sensor and/or actuator data,
-- a smart antenna component or module 28, generating smart antenna data, and/or
-- a smart battery component or module 29, generating smart battery data.

It is proposed to iteratively apply the first and second step (i.e. the transmission of the downlink performance vector dataset and the uplink performance vector dataset) repeatedly, and thereby realize a closed-loop system or service, providing for an optimization regarding the individual configuration of the internet-of-things communication devices 20 of the internet-of-things system 200 or service. The repetition of this exchange of performance vector datasets is preferably able to be specifically adapted for each of the internet-of-things communication devices 20 individually (depending on their respective environment-especially the battery draining situation), especially by means of - regarding the specific internet-of-things communication device 20 and a considered downlink performance vector dataset 201 - the subsequent uplink performance vector dataset 202 either corresponding to a timer-triggered uplink performance vector dataset 202, or to an event-triggered uplink performance vector dataset 202. In case of the uplink performance vector dataset 202 being timer-triggered, the timer interval especially corresponds to a timer interval as defined by a performance vector dataset timer indication being either part of the considered downlink performance vector dataset 201, or being part of a preceding downlink performance vector dataset 201.

Preferably in a third step prior to the first step, the unique device profile is generated or created by the internet-of-things performance management system 500, especially its performance management service 520, wherein especially the unique device profile comprises at least one of the following:
the primary vertical or use case type, the device manufacturer and/or model, the device software version, the device hardware version, the wireless communication module manufacturer and/or model, the wireless communication module firmware version, the wireless communication module hardware version, the cloud provider, the battery manufacturer and/or model, including performance characteristics, the antenna manufacturer and/or model, the sensor and/or actuator manufacturer and/or model, the global navigation satellite system manufacturer and/or model, communication profile-related key performance indicators, radio access technology-related key performance indicators, power saving features-related key performance indicators, and deployment characteristics-related key performance indicators.

In following example the inventive method is performed by means of ten processing steps:

In a first processing step, a unique device profile is created:
The service provider of the internet-of-things service or of the internet-of-things system 200 creates a Unique Device Profile (UDP) (e.g. especially using an online form on the performance management service (PMS) 520) especially taking into consideration: the primary vertical or use case type (for analytics purposes), the device manufacturer / model (of the internet-of-things communication device 20 or plurality of types of internet-of-things communication devices 20 used), the device software version, the device hardware version, the wireless communication module manufacturer / model, the module firmware version, the module hardware version, the cloud provider, the battery manufacturer / model (especially including performance characteristics such as the nominal voltage, the nominal capacity (Ah or Wh), the year self-discharge), the antenna manufacturer / model, the sensor and/or actuator manufacturer / model, the GNSS manufacturer / model (as well as: its operation mode configuration parameters (automatic, Host CPU, continuous, manufacturer default), the A-GPS use (incl. cadence for download of data, incl. protocol), the ephemeris data download cadence),
the communication profile (per message type or per sensor data, or software / hardware update) as a first set of key performance indicators (such as: the type of data, i.e. of sensor data or of actuator data, the number of messages and bytes per message per day, the protocols used (CoAP, MQTT, MQTT-SN, HTTP, Non-IP, IPv4, IPv6, UDP, TCP (incl. keep alive timer)), the encryption settings (DTLS/TLS), the cipher specification used, the version of the LwM2M used, the version of the oneM2M used),
the radio access technologies (per message type) as a second set of key performance indicators (NarrowBand loT (incl. 3GPP^{™} Version support, Power Class), LTE-M (incl. 3GPP^{™} Version support, Power Class), 2G (incl. 3GPP^{™} Version support, Power Class), 3G (incl. 3GPP^{™} Version support, Power Class), 4G (incl. 3GPP^{™} Version support, Power Class), 5G-NR (incl. type NSA, SA)),
the power saving features configured (per radio access technology) as a third set of key performance indicators (connected mode: discontinuous reception support, connected mode:
   early release assistance indication, idle mode: power saving mode support (including T3324 timer), idle mode: enhanced discontinuous reception support, idle mode: long periodic tracking area update ext (including T3412 timer)),
   the deployment Characteristics as a fourth set of key performance indicators (installation locations or countries/regions (including percentage), indoor/outdoor, static or mobile (incl. average distance travelled per day), street level, underground, above ground, building compositions).
The type of data as part of the first set of key performance indicators especially comprises sensor data types and/or actuator data types. The sensor data types especially comprise one or a plurality of the following: 3D sensor (e.g., laser, radar), accelerometer sensor, acoustic sensor, air particle sensor, breathalyzer, carbon dioxide sensor, carbon monoxide detector, catalytic bead sensor, chemical sensor, chlorine residual sensor, corrosion sensor, electrochemical gas sensor, flooding sensor, flow sensor, fluorescent chloride sensor, gyroscope sensor, humidity sensor, hydrogen sensor, hydrogen sulfide sensor, hygrometer, image sensors (e.g., CCD, CMOS), infrared sensor, laser sensor, level sensor, magnetic sensor, metal detector, motion detector, nitrogen oxide sensor, oxygen sensor, oxygen-reduction sensor, ozone monitor, pH sensor, photodetector, potential sensor, presence and proximity sensor, pressure sensor, pyrometer, seismic sensor, smoke sensor, soil humidity sensor, thermal sensor, total organic carbon sensor, vibration sensor, water quality sensor, water consumption sensor. The actuator data types especially comprise one or a plurality of the following: electric motors, electric valves, electroactive polymers, hydraulic cylinders, servomotors, solenoids, spring valves, stepper motors.

In a second processing step, service activation is performed: The internet-of-things service provider activates the "managed connectivity service" for one of the internet-of-things communication devices (i.e. for a 'unique' (or specific) device) on the performance management system 520: the corresponding base station system (BSS) (especially for 3GPP^{™} scenarios) or base station entity 111 is triggered to communicate with the specific internet-of-things communication device 20; a corresponding billing/mediation system is initialized in the background, and a "Customer Profile" (performance management subscription 25 of the internet-of-things communication device 20) created. The latter point especially comprises to logically assign all unique device IDs (and SIM cards IMSI, if applicable) to the customer profile, in accordance with local compliance rules (authorization to host and process data, date permission given). Furthermore, the service activation especially comprises to define a validity period of "managed connectivity service" subscription per device, as well as to define (as a first key performance indicator) a "service tier", defined per device, especially according to the frequency of downlink performance vector file transfer, e.g.: light tier - set-up, yearly KPI tracking, EOL (end of life) report; medium tier - set-up, quarterly KPI tracking, EOL report; or high tier - set-up, weekly KPI tracking, EOL report.

In a third processing step, the initial downlink performance vector dataset (PVD) is generated for the (specific) device 20, and especially involves one or a plurality of the following sub-steps:
-- the performance management system 520 (or the internet-of-things performance management system 500) consults external data sources (EDS) 503, 504, 505, and obtains:
   data from the coverage prediction tool 503 and/or data lake (such as: NB-IoT/LTE-M CE-Levels and/or RSRP values per installation location or averages per country/region), and/or
   data from regional profile database 504 and/or data lake (such as, e.g., temperature / precipitation per country/region (current, average, annual profile, time-based), foliage variations per country/region) and/or
   data network profile database 505 and/or data lake (network configurations per country/region (power saving features, NB-IoT/LTE-M repetitions, NAT firewall timer, etc.) and/or frequency bands);
-- the performance management system 520 (or the internet-of-things performance management system 500) provides the collected EDS data set and the unique device profile data (UDP) (per device) to the Intelligent Optimizer Algorithm (!OA) 510.
-- the lOA 510 runs a virtual twin modeling (VTM) prediction simulation and models a "Candidate PVD" per device 20;
-- the lOA 520 queries the loT Project Profile Library (IPPL) 501 to find similar, yet superior, projects as compared to the "Candidate PVD"; it then iteratively identifies the most suitable optimization option, reruns the VTM to confirm, and finalizes an "initial PVD" per device 20,
-- the lOA 520 reverts to PMS with the optimal "initial Downlink PVD" per device, especially including: the PVD Dataset, a PVD timer (TPVD) (i.e., this may be a device-specific or generic value defined by the PMS), which the recipient device uses to trigger an uplink PVD back to the PMS; if the PVD timer field is omitted, Uplink PVD reporting will be event-based.

In a fourth processing step, the initial downlink performance vector dataset (PVD) is generated for the (specific) device 20: The initial downlink (or first downlink) performance vector dataset 201 is sent to the corresponding, i.e., specific, internet-of-things communication device 20, especially by means of the PMS 520 pushing the initial PVD 201 to each device via an Edge Computing Node (ECN) e.g., eNodeB/radio base station, Gateway, oneM2M Middle Node. Especially, specific policies are implemented for the downlink message, for instance: a randomization timer is used to prevent harm to the network (i.e. to ensure that the PVD times for a plurality of internet-of-things communication devices 20 are not terminated at the same point in time for too many devices), customer and/or device-specific settings for delivery (priority, event-based triggering) are possible, depending on the PMS configuration, this may be done during times of low traffic (e.g., non-peak hours).

In a fifth processing step, the internet-of-things communication device 20 processes the Initial downlink (or first downlink) performance vector dataset 501 (i.e. each device processes its specific initial downlink PVD), and especially involves one or a plurality of the following sub-steps:
-- the device-specific initial PVD is received at the corresponding device;
-- the initial PVD is routed to the performance management client (PMC) 21 in the device 20; this may be implemented as software either on the wireless communication chipset, in the wireless communication module, or in the microcontroller (MCU) of the device 20;
-- the PMC 21 analyzes the initial PVD 201 and triggers a reconfiguration of the device 20, i.e., sends commands to change software and/or hardware characteristics of the device; this includes, but is not limited to: a reconfiguration of the GNSS chip or native GNSS functionality in the wireless communication module (e.g., changing the configuration of automatic mode, host CPU mode, continuous tracing mode, manufacturer default, ephemeris data download period, A-GPS settings, etc.), modification of sensor and/or actuator properties, changes in the cadence of sensor readings and/or actuator activations, changes in the power consumption of components, systems, or the whole device (e.g., powering off, suspensions into/out of inactivity states, cadence of booting events, etc.), changes to antenna tuning circuits, matching circuits in smart antenna products or front-end circuitry, changes to battery circuits in smart battery products or front-end circuitry, changes to the application message structure (amount of data - e.g., content, frequency of communication, protocol used, cadence of keep-alive pings, etc.), changes to the 3GPP^{™} power saving feature settings, changes to the frequency bands of operation (band settings), network acquisition (scanning, network preferences, reselection timers, etc.) for 3GPP^{™} and/or proprietary mechanisms;
-- the device (i.e. the internet-of-things communication device 20) will set a PVD timer (TPVD), if defined in the initial PVD 201.

In a sixth processing step, the device 20 generates & sends uplink PVD update (i.e. each device generates an uplink PVD update), especially by means of:
-- once the performance vector dataset timer (TPVD) expires, or a reporting event defined by the performance management client 21 is triggered, the performance management client 21 prepares an uplink PVD update, including one or a plurality of the following: battery performance metrics (voltage, current draw), current configuration of the GNSS chip or native GNSS functionality in the module, current setting of sensor and/or actuator properties, current cadence of sensor readings and/or actuator activations, current power consumption configuration of components, systems, or whole device (e.g., powering off, suspensions in inactivity states, cadence of booting events, etc.), current configuration of antenna tuning circuits, matching circuits in smart antenna products, current configuration of battery circuits in smart battery products, current configuration application message structure (amount of data - e.g., content, frequency of communication, protocol used, cadence of keep-alive pings, etc.), current configuration of 3GPP^{™} power saving feature settings, changes to the frequency bands of operation (band settings), network acquisition (scanning, network preferences, reselection timers, etc.) for 3GPP^{™} and/or proprietary mechanisms, positioning / installation data for the device, if changed
-- the device sends the "Uplink PVD update" (i.e. the first uplink performance vector dataset 202) to the PMS 520 via an Edge Computing Node (ECN) e.g., eNodeB, Gateway, oneM2M Middle Node; this should be transmitted back-to-back of the next regularly scheduled app message (i.e. more or less directly after the next regularly uplink operative transmission of the corresponding (specific) internet-of-things communication device 20).

In a seventh processing step, the PMS 520 processes the uplink PVD (update) 202 (i.e. the PMS 520 processes the uplink PVD 202 (update) from each device), and especially involves one or a plurality of the following sub-steps:
-- the PMS 520 shares the performance vector dataset per device with the back-end systems for KPI metrics, recording of transaction events, etc. The back-end system is aware of when PVD reporting fails, frequency of PVD reporting, changes to the configuration of the device, etc.;
-- the PMS consults data sources to generate update PVD file for virtual twin modeling (VTM), especially comprising to obtain data from coverage prediction tool and/or data lake (NB-IoT/LTE-M CE-Levels and/or RSRP values per installation location or averages per country/region), and/or to obtain data from regional profile database and/or data lake (Temperature/precipitation per country/region (current, average, annual profile, time-based) and/or foliage variations per country/region), and/or to obtain data network profile database and/or data lake (network configurations per country/region (power saving features, NB-IoT/LTE-M repetitions, NAT firewall timer, etc.), and/or frequency bands);
-- the PMS 520 provides updated EDS (external data sources) dataset and uplink PVD update (per device) to the lOA;
-- the IOA runs a VTM prediction simulation and models a new "Candidate PVD" per device;
-- the IOA queries the IPPL to find similar, yet superior, projects as compared to the new "Candidate PVD"; it then iteratively identifies the most suitable optimization option, reruns the VTM to confirm, and finalizes an "Downlink PVD update" per device;
-- the VTM reverts to PMS with the optimal "Downlink PVD update" per device (contains the PVD Dataset and/or contains a PVD timer (TPVD)(i.e., this may be a device-specific or generic value defined by the PMS), which the recipient device uses to trigger a PVD Report response back to the PMS).

In an eighth processing step, the PMS sends downlink PVD update (i.e. the second downlink performance vector dataset) to the internet-of-things communication device 20 (i.e. the downlink PVD update is pushed to each device), especially by means of:
-- the PMS pushes the updated PVD to the device via an Edge Computing Node (ECN) e.g., eNodeB, Gateway, oneM2M Middle Node;
-- specific policies may be implemented for the Downlink message, for instance: a randomization timer is used to prevent harm to the network, and/or customer and/or device-specific settings for delivery (priority, event-based triggering) are possible, and/or depending on the PMS configuration, this may be done during times of low traffic (e.g., non-peak hour).

In a nineth processing step, each device processes the downlink PVD update (i.e. the second downlink performance vector dataset (PVD file) generated is received at the corresponding device), and especially involves one or a plurality of the following sub-steps:
-- the downlink PVD is routed to the PMC 21 in the internet-of-things communication device 20;
-- the PMC analyzes the PVD and triggers a reconfiguration of the device, i.e., sends commands to change software and/or hardware characteristics of the device; this includes, but is not limited to: the reconfiguration of the GNSS chip or native GNSS functionality in the module (e.g., changing the configuration of automatic mode, host CPU mode, continuous tracing mode, manufacturer default, ephemeris data download period, A-GPS settings, etc.), modification of sensor and/or actuator properties, changes in the cadence of sensor readings and/or actuator activations, changes in the power consumption of components, systems, or the whole device (e.g., powering off, suspensions into/out of inactivity states, cadence of booting events, etc.), changes to antenna tuning circuits, matching circuits in smart antenna products or front-end circuitry, changes to battery circuits in smart battery products or front-end circuitry, changes to the application message structure (amount of data - e.g., content, frequency of communication, protocol used, cadence of keep-alive pings, etc.), changes to the 3GPP^{™} power saving feature settings, changes to the frequency bands of operation (band settings), network acquisition (scanning, network preferences, reselection timers, etc.) for 3GPP^{™} and/or proprietary mechanisms;
-- the device (i.e. the internet-of-things communication device 20) will set a PVD timer (TPVD), as defined in the respective downlink PVD.

The sixth to nineth processing steps are repeated according to the preferred embodiment of the present invention described here, until the managed connectivity service is discontinued.

In a tenth processing step, the performance management service is discontinued; an device (internet-of-things communication device 20) is preferably able to have the managed connectivity service deactivated/resumed at any time:
Whenever the PMS 520 sets the PVD timer (TPVD) to a value of 0, the PMC 21 will deactivate the managed connectivity service; the PMS 520 can resume the service at any time by sending to the PMC the most recent PVD file with a non-zero value of the timer TPVD.

The loT Project Profile Library (IPPL) 501 preferably has the purpose of building upon a virtual twin modeling data base of devices, and to find potential optimization scenarios much faster and in an adaptive way, rather than using conventional manual assessments. Hence, a "Profile Library" is proposed, especially comprising or consisting of a searchable library (in a database or a data lake) of loT projects modeled by a virtual twin modeling engine, wherein each loT project is stored in a manner that allows for quick comparison and weighting/ranking by key performance and configuration properties, including one or a plurality out of the following:
-- battery life(per coverage condition, per mobility condition),
-- average transmitted data size(per day, per week, per month, per year),
-- throughput(per day, per week, per month, per year),
-- latency(per day, per week, per month, per year),
-- loT vertical/ use case,
-- radio access technology used,
-- mobility,
-- sensing/ actuation needs, including sensor and/or actuator properties, cadence of sensor readings and/or actuator activations,
-- power consumption during idle mode procedures, during connected mode procedures,
-- configuration of components, such as the GNSS chip or native GNSS functionality in the module (e.g., changing the configuration of automatic mode, host CPU mode, continuous tracing mode, manufacturer default, ephemeris data download period, A-GPS settings, etc.), antenna tuning circuits, matching circuits in smart antenna products or front-end circuitry, battery circuits in smart battery products or front-end circuitry,
-- power consumption of components, systems, or the whole device (e.g., powering off, suspensions into/out of inactivity states, cadence of booting events, etc.),
-- application message structure (amount of data -e.g., content, frequency of communication, protocol used, cadence of keep-alive pings, etc.),
-- 3GPP^{™} power saving feature settings,
-- frequency bands of operation (band settings),
-- network acquisition settings (scanning, network preferences, reselection timers, etc.) for 3GPP^{™} and/or proprietary mechanisms.

The performance vector dataset (PVD) (either downlink 201 or uplink 202) has the purpose to be exchanged within the managed connectivity service according to the present invention, bidirectionally between device-based clients (Performance Management Client, PMC 21) and an authorized server (connectivity management server or internet-of-things performance management system 500 or performance management service 520). The purpose of this file is to exchange data between the client and server regarding the current configuration and performance status of the device on the uplink (from client to the server), as well as to provide an initial or updated proposal of configuration changes to the device on the downlink (from server to client). The file is device-specific, i.e., it is especially tied to a unique device ID.

Regarding file handling, one or a plurality of the following formats are preferably used: JSON, CBOR, XML, YML. The transmission is performed, preferably using CoAP, MQTT, MQTT-SN, HTTP, Non-IP, and the provenance of data and/or the quality of Information (Qol) is provided or assured by means of tags. The file transfer is preferably performed, on the uplink, by the PMC 21 back-to-back after a regular application message from the device, only after a PVD timer (TPVD)(i.e., this may be a device-specific or generic value defined by the PMS) expires; on the downlink, the PMS 520 pushes an initial PVD to the unique device, respecting any specific policies which may be implemented for such downlink messages, for instance: a randomization timer is used to prevent harm to the network; customer and/or device-specific settings for delivery (priority, event-based triggering) are possible; depending on the PMS configuration, this may be done during times of low traffic (e.g., non-peak hour). All transmission to/from the server are preferably directed via an Edge Computing Node (ECN) e.g., eNodeB, Gateway, oneM2M Middle Node.

The file of the performance vector dataset preferably comprises at least one out of the following but are not limited to:
-- a configuration of the GNSS chip or native GNSS functionality in the module (e.g., configuration of automatic mode, host CPU mode, continuous tracing mode, manufacturer default, ephemeris data download period, A-GPS settings, etc.),
-- properties of the sensors and/or actuators,
-- cadence of sensor readings and/or actuator activations,
-- power consumption configurations of components, systems, or the whole device (e.g., powering off, suspensions into/out of inactivity states, cadence of booting events, etc.),
-- configurations for antenna tuning circuits, matching circuits in smart antenna products or front-end circuitry,
-- configurations for battery circuits in smart battery products or front-end circuitry,
-- configurations for application message structure (amount of data -e.g., content, frequency of communication, protocol used, cadence of keep-alive pings, etc.),
-- configurations for 3GPP^{™} power saving feature settings,
-- configurations for frequency bands of operation (band settings),
-- configurations for network acquisition algorithms (scanning, network preferences, reselection timers, etc.) for 3GPP^{™} and/or proprietary mechanisms.

## Claims

1. Method for operating an internet-of-things system (200) using an internet-of-things performance management system (500), wherein the internet-of-things system (200) comprises a plurality of internet-of-things communication devices (20) in a communication network (100) that provides radio coverage in a predetermined geographical area (120), and - by means of transmission of internet-of-things payload data from the internet-of-things communication devices (20), respectively, to the communication network (100) and/or from the communication network (100) to the internet-of-things communication devices (20), respectively - the internet-of-things system (200) provides an internet-of-things service,
wherein each of the internet-of-things communication devices (20) comprises a performance management client functionality (21) and operates according to configuration information of a respective performance vector dataset (201, 202), wherein the performance vector dataset (201, 202) is adapted to the internet-of-things communication device (20), respectively, and its respective environment or situation and/or is iteratively adapted or able to be iteratively adapted, wherein, in order to operate a specific internet-of-things communication device (20), the method comprises the following steps:
-- in a first step, transmitting a first downlink performance vector dataset (201), triggered by the internet-of-things performance management system (500), towards the specific internet-of-things communication device (20),
-- in a second step, transmitting a first uplink performance vector dataset (202), by the specific internet-of-things communication device (20), towards the internet-of-things performance management system (500),
wherein the first uplink performance vector dataset (202) comprises performance feedback information regarding the specific internet-of-things communication device (20) and its operation,
wherein at least a second downlink performance vector dataset (201) is transmitted, triggered by the internet-of-things performance management system (500), towards the specific internet-of-things communication device (20), wherein the second downlink performance vector dataset (201) comprises, compared to the first downlink performance vector dataset (201), different configuration information.

2. Method according to claim 1, wherein in determining the different configuration information of the second downlink performance vector dataset (201), the internet-of-things performance management system (500), and especially an intelligent optimizer algorithm (510) and/or a performance management service (520) thereof, takes into account the performance feedback information of the first uplink performance vector dataset (202).

3. Method according to one of the preceding claims, wherein the different configuration information, especially compared to the first downlink performance vector dataset (201), of the second or a subsequent downlink performance vector dataset (201) is obtained by means of the internet-of-things performance management system (500), especially its performance management service (520), using at least one of the following:
-- the internet-of-things performance management system (500), especially its performance management service (520), shares the first or subsequent uplink performance vector dataset (202), received in the second step from the specific internet-of-things communication device (20), with backend systems, especially for key performance indicator metrics and/or the recording of transaction events,
-- the internet-of-things performance management system (500), especially its performance management service (520), obtains data from external data sources (503, 504, 505), especially at least one of coverage prediction tools (503), regional profiles (504) and network profiles (505),
-- the internet-of-things performance management system (500), especially its performance management service (520), provides such data to the intelligent optimizer algorithm (510),
-- the intelligent optimizer algorithm (510) runs a virtual twin modeling prediction simulation and models a new downlink performance vector dataset (201).

4. Method according to one of claims 2 or 3, wherein in determining - by the internet-of-things performance management system (500), and especially the intelligent optimizer algorithm (510) thereof - the configuration information of the second downlink performance vector dataset (201) at least one of the following data sources is or are taken into consideration, in addition to taking into consideration the performance feedback information of the first uplink performance vector dataset (202):
-- internet-of-things project profile library (501), especially comprising virtual twin project data and/or a catalog of digital twins organized per internet-of-things solution or internet-of-things vertical,
-- internet-of-things device profile library (502)
-- external data sources (503, 504, 505), especially at least one of coverage prediction tools (503), regional profiles (504) and network profiles (505).

5. Method according to one of the preceding claims, wherein, regarding the specific internet-of-things communication device (20), the first and/or subsequent downlink performance vector dataset (201) is or corresponds to a unique device profile, especially stored in the internet-of-things device profile library (502), and/or wherein, likewise regarding the specific internet-of-things communication device (20), the first and/or subsequent uplink performance vector dataset (202) comprises or its data are derived from or generated in view of device-specific key performance indicators and/or instruction sets as part of the or one of the preceding downlink performance vector dataset (201).

6. Method according to one of the preceding claims, wherein regarding the specific internet-of-things communication device (20) and a considered downlink performance vector dataset (201), the subsequent uplink performance vector dataset (202) either corresponds to:
-- a timer-triggered uplink performance vector dataset (202), or
-- an event-triggered uplink performance vector dataset (202),
wherein in case of the uplink performance vector dataset (202) being timer-triggered, the timer interval corresponds to a timer interval as defined by a performance vector dataset timer indication being part of the considered downlink performance vector dataset (201), or a preceding downlink performance vector dataset (201).

7. Method according to one of claims 5 or 6, wherein, in a third step prior to the first step, the unique device profile is generated or created by the internet-of-things performance management system (500), especially its performance management service (520), wherein especially the unique device profile comprises at least one of the following:
the primary vertical or use case type, the device manufacturer and/or model, the device software version, the device hardware version, the wireless communication module manufacturer and/or model, the wireless communication module firmware version, the wireless communication module hardware version, the cloud provider, the battery manufacturer and/or model, including performance characteristics, the antenna manufacturer and/or model, the sensor and/or actuator manufacturer and/or model, the global navigation satellite system manufacturer and/or model, communication profile-related key performance indicators, radio access technology-related key performance indicators, power saving features-related key performance indicators, and deployment characteristics-related key performance indicators.

8. Method according to one of claims 6 or 7, wherein between a considered downlink performance vector dataset (201) being received by the specific internet-of-things communication device (20), and the subsequent uplink performance vector dataset (202) being transmitted by the specific internet-of-things communication device (20), especially between the first step and the second step,
the specific internet-of-things communication device (20), especially its performance management client functionality (21), processes the content of the considered downlink performance vector dataset (201), and especially sets a time according to the performance vector dataset timer indication and/or triggers a reconfiguration of parts, modules or components of the internet-of-things communication device (20), the latter especially comprising at least one out of the following:
-- a reconfiguration of the global navigation satellite system chip or functionality,
-- a modification of sensor properties and/or of actuator properties,
-- a modification in the cadence of sensor readings and/or actuator activations,
-- a modification in the power consumption of components, systems, or the whole device,
-- a modification of antenna tuning circuits, matching circuits and/or front-end circuitry,
-- a modification of battery circuits and/or front-end circuitry,
-- a modification of the application message structure,
-- a modification of the 3GPP^{™} power saving feature settings,
-- a modification of the frequency bands of operation,
-- a modification of network acquisition procedures for 3GPP^{™} and/or proprietary mechanisms, especially regarding scanning, network preferences, reselection timers.

9. Method according to one of the preceding claims, wherein the uplink performance vector dataset (202), being transmitted by the specific internet-of-things communication device (20) to the internet-of-things performance management system (500), especially its performance management service (520), comprises at least one out of the following:
-- a battery performance metrics,
-- the current configuration of the global navigation satellite system chip or functionality,
-- current settings of sensor and/or actuator properties,
-- the current cadence of sensor readings and/or of actuator activations,
-- the current power consumption configuration of components, systems, or the whole device,
-- the current configuration of antenna tuning circuits, matching circuits in smart antenna products,
-- current configuration of battery circuits,
-- the current configuration of application message structure,
-- the current configuration of 3GPP^{™} power saving feature settings,
-- changes to the frequency bands of operation,
-- network acquisition procedures for 3GPP^{™} and/or proprietary mechanisms, especially regarding scanning, network preferences, reselection timers,
-- positioning / installation data for the device, if changed.

10. Method according to one of the preceding claims, wherein both the downlink performance vector datasets (201) and the uplink performance vector datasets (202) are transmitted, between the specific internet-of-things communication device (20) and the internet-of-things performance management system (500), especially its performance management service (520), via an edge computing node, ECN, especially a base station entity or an eNodeB or a gateway entity or a oneM2M middle node, and especially, at least in case of the uplink performance vector datasets (202), back-to-back of the next regularly scheduled app message in uplink direction.

11. System for operating an internet-of-things system (200), especially an internet-of-things performance management system (500), wherein the internet-of-things system (200) comprises a plurality of internet-of-things communication devices (20) in a communication network (100) that provides radio coverage in a predetermined geographical area (120), and - by means of transmission of internet-of-things payload data from the internet-of-things communication devices (20), respectively, to the communication network (100) and/or from the communication network (100) to the internet-of-things communication devices (20), respectively - the internet-of-things system (200) provides an internet-of-things service,
wherein each of the internet-of-things communication devices (20) comprises a performance management client functionality (21) and operates according to configuration information of a respective performance vector dataset (201, 202), wherein the performance vector dataset (201, 202) is adapted to the internet-of-things communication device (20), respectively, and its respective environment or situation and/or is iteratively adapted or able to be iteratively adapted, wherein, in order to operate a specific internet-of-things communication device (20), the system or internet-of-things performance management system (500) is configured such that:
-- a first downlink performance vector dataset (201) is transmitted, triggered by the internet-of-things performance management system (500), towards the specific internet-of-things communication device (20),
-- a first uplink performance vector dataset (202) is transmitted, by the specific internet-of-things communication device (20), towards the internet-of-things performance management system (500),
wherein the first uplink performance vector dataset (202) comprises performance feedback information regarding the specific internet-of-things communication device (20) and its operation,
wherein the system is configured such that at least a second downlink performance vector dataset (201) is transmitted, triggered by the internet-of-things performance management system (500), towards the specific internet-of-things communication device (20), wherein the second downlink performance vector dataset (201) comprises, compared to the first downlink performance vector dataset (201), different configuration information.

12. Internet-of-things communication device (20) for being operated as part of an internet-of-things system (200), especially comprising or relating to an internet-of-things performance management system (500), wherein the internet-of-things system (200) comprises a plurality of internet-of-things communication devices (20) in a communication network (100) that provides radio coverage in a predetermined geographical area (120), and - by means of transmission of internet-of-things payload data from the internet-of-things communication devices (20), respectively, to the communication network (100) and/or from the communication network (100) to the internet-of-things communication devices (20), respectively - the internet-of-things system (200) provides an internet-of-things service,
wherein the internet-of-things communication device (20) comprises a performance management client functionality (21) and operates according to configuration information of a respective performance vector dataset (201, 202), wherein the performance vector dataset (201, 202) is adapted to the internet-of-things communication device (20) and its environment or situation and/or is iteratively adapted or able to be iteratively adapted,
wherein the internet-of-things communication device (20) is configured such that:
-- a first downlink performance vector dataset (201) is received, by the internet-of-things communication device (20), from the internet-of-things performance management system (500),
-- a first uplink performance vector dataset (202) is transmitted, by the specific internet-of-things communication device (20), towards the internet-of-things performance management system (500),
wherein the first uplink performance vector dataset (202) comprises performance feedback information regarding the specific internet-of-things communication device (20) and its operation,
wherein at least a second downlink performance vector dataset (201) is configured to be transmitted, triggered by the internet-of-things performance management system (500), towards the specific internet-of-things communication device (20), wherein the second downlink performance vector dataset (201) comprises, compared to the first downlink performance vector dataset (201), different configuration information.

13. Program comprising a computer-readable program code which, when executed on a computer or on an internet-of-things communication device (20) and/or on a performance management client functionality (21) and/or on an internet-of-things performance management system (500) or an entity or node thereof, especially an intelligent optimizer algorithm (510) and/or a performance management service (520) thereof, causes the computer or the internet-of-things communication device (20) and/or the performance management client functionality (21) and/or the internet-of-things performance management system (500) or an entity or node thereof, especially the intelligent optimizer algorithm (510) and/or the performance management service (520) thereof to perform a method according to one of claims 1 to 10.

14. Computer-readable medium comprising instructions which, when executed on a computer or on an internet-of-things communication device (20) and/or on a performance management client functionality (21) and/or on a internet-of-things performance management system (500) or an entity or node thereof, especially an intelligent optimizer algorithm (510) and/or a performance management service (520) thereof, causes the computer or the internet-of-things communication device (20) and/or the performance management client functionality (21) and/or the internet-of-things performance management system (500) or an entity or node thereof, especially the intelligent optimizer algorithm (510) and/or the performance management service (520) thereof to perform a method according to one of claims 1 to 10.

## Patentansprüche

1. Verfahren zum Betreiben eines Internet-of-Things-Systems (200), das ein Internet-of-Things-Leistungsmanagementsystem (500) verwendet, wobei das Internet-of-Things-System (200) mehrere Internet-of-Things-Kommunikationsvorrichtungen (20) in einem Kommunikationsnetz (100) umfasst, das eine Funkversorgung in einem zuvor festgelegten geographischen Gebiet (120) bereitstellt, und das Internet-of-Things-System (200) - mittels der Übertragung von Internet-of-Things-Nutzdaten von den jeweiligen Internet-of-Things-Kommunikationsvorrichtungen (20) zu dem Kommunikationsnetz (100) und/oder von dem Kommunikationsnetz (100) zu den jeweiligen Internet-of-Things-Kommunikationsvorrichtungen (20) - einen Internet-of-Things-Dienst bereitstellt,
wobei jede der Internet-of-Things-Kommunikationsvorrichtungen (20) eine Leistungsmanagement-Clientfunktionalität (21) umfasst und gemäß Konfigurationsinformationen eines jeweiligen Leistungsvektordatensatzes (201, 202) arbeitet,
wobei der Leistungsvektordatensatz (201, 202) an die Internet-of-Things-Kommunikationsvorrichtung (20) bzw an ihre jeweilige Umgebung oder Situation angepasst ist und/oder iterativ angepasst wird oder iterativ angepasst werden kann,
wobei das Verfahren, um eine spezifische Internet-of-Things-Kommunikationsvorrichtung (20) zu betreiben, die folgenden Schritte umfasst:
- in einem ersten Schritt, Senden eines ersten Downlink-Leistungsvektordatensatzes (201), ausgelöst durch das Internet-of-Things-Leistungsmanagementsystem (500), zu der spezifischen Internet-of-Things-Kommunikationsvorrichtung (20),
- in einem zweiten Schritt, Senden eines ersten Uplink-Leistungsvektordatensatzes (202), durch die spezifische Internet-of-Things-Kommunikationsvorrichtung (20), zu dem Internet-of-Things-Leistungsmanagementsystem (500),
wobei der erste Uplink-Leistungsvektordatensatz (202) Leistungsrückmeldungsinformationen bezüglich der spezifischen Internet-of-Things-Kommunikationsvorrichtung (20) und ihren Betrieb umfasst,
wobei mindestens ein zweiter Downlink-Leistungsvektordatensatz (201), ausgelöst durch das Internet-of-Things-Leistungsmanagementsystem (500), zu der spezifischen Internet-of-Things-Kommunikationsvorrichtung (20) gesendet wird, wobei der zweite Downlink-Leistungsvektordatensatz (201) im Vergleich zu dem ersten Downlink-Leistungsvektordatensatz (201) andere Konfigurationsinformationen umfasst.

2. Verfahren nach Anspruch 1, wobei, beim Bestimmen der anderen Konfigurationsinformationen des zweiten Downlink-Leistungsvektordatensatzes (201), das Internet-of-Things-Leistungsmanagementsystem (500), und insbesondere ein intelligenter Optimierungsalgorithmus (510) und/oder ein Leistungsmanagementdienst (520) dieses Systems, die Leistungsrückmeldungsinformationen des ersten Uplink-Leistungsvektordatensatzes (202) berücksichtigt.

3. Verfahren nach einem der vorangehenden Ansprüche, wobei die anderen Konfigurationsinformationen, insbesondere im Vergleich zu dem ersten Downlink-Leistungsvektordatensatz (201), des zweiten oder eines anschließenden Downlink-Leistungsvektordatensatzes (201) mittels des Internet-of-Things-Leistungsmanagementsystems (500), insbesondere seines Leistungsmanagementdienstes (520), unter Verwendung mindestens eines von Folgendem erhalten werden:
- das Internet-of-Things-Leistungsmanagementsystem (500), insbesondere sein Leistungsmanagementdienst (520), nutzt den ersten oder anschließenden Uplink-Leistungsvektordatensatz (202), der im zweiten Schritt von der spezifischen Internet-of-Things-Kommunikationsvorrichtung (20) empfangen wurde, mit Backend-Systemen gemeinsam, insbesondere für Leistungskennzahl-Messgrößen und/oder die Aufzeichnung von Transaktionsereignissen,
- das Internet-of-Things-Leistungsmanagementsystem (500), insbesondere sein Leistungsmanagementdienst (520), erhält Daten von externen Datenquellen (503, 504, 505), insbesondere von mindestens einem von Versorgungsreichweiten-Vorhersage-Tools (503), regionalen Profilen (504) und Netzprofilen (505),
- das Internet-of-Things-Leistungsmanagementsystem (500), insbesondere sein Leistungsmanagementdienst (520), übermittelt solche Daten an den intelligenten Optimierungsalgorithmus (510),
- der intelligente Optimierungsalgorithmus (510) führt eine virtuelle Zwillingsmodellierungsvorhersagesimulation aus und modelliert einen neuen Downlink-Leistungsvektordatensatz (201).

4. Verfahren nach einem der Ansprüche 2 und 3, wobei beim Bestimmen - durch das Internet-of-Things-Leistungsmanagementsystem (500), und insbesondere seinen intelligenten Optimierungsalgorithmus (510) - der Konfigurationsinformationen des zweiten Downlink-Leistungsvektordatensatzes (201) mindestens eine der folgenden Datenquellen, zusätzlich zur Berücksichtigung der Leistungsrückmeldungsinformationen des ersten Uplink-Leistungsvektordatensatzes (202), berücksichtigt wird bzw werden:
- eine Internet-of-Things-Projektprofilbibliothek (501), die insbesondere virtuelle Zwillingsprojektdaten und/oder einen Katalog digitaler Zwillinge umfasst, die nach Internet-of-Things-Lösungen oder Internet-of-Things-Vertikalen organisiert sind,
- eine Internet-of-Things-Vorrichtungsprofilbibliothek (501),
- externe Datenquellen (503, 504, 505), insbesondere mindestens eines von Versorgungsreichweiten-Vorhersage-Tools (503), regionalen Profilen (504) und Netzprofilen (505).

5. Verfahren nach einem der vorangehenden Ansprüche, wobei, bezüglich der spezifischen Internet-of-Things-Kommunikationsvorrichtung (20), der erste und/oder anschließende Downlink-Leistungsvektordatensatz (201) ein eindeutiges Vorrichtungsprofil ist oder einem solchen entspricht, das insbesondere in der Internet-of-Things-Vorrichtungsprofilbibliothek (502) gespeichert ist, und/oder wobei, gleichermaßen bezüglich der spezifischen Internet-of-Things-Kommunikationsvorrichtung (20), der erste und/oder anschließende Uplink-Leistungsvektordatensatz (202) vorrichtungsspezifische Leistungskennzahlen und/oder Instruktionssätze als Teil des, oder eines des, vorherigen Downlink-Leistungsvektordatensatzes (201) umfasst oder die Daten des ersten und/oder anschließenden Uplink-Leistungsvektordatensatzes (202) von vorrichtungsspezifischen Leistungskennzahlen und/oder Instruktionssätzen als Teil des, oder eines des, vorherigen Downlink-Leistungsvektordatensatzes (201) abgeleitet werden oder die Daten des ersten und/oder anschließenden Uplink-Leistungsvektordatensatzes (202) im Hinblick auf vorrichtungsspezifische Leistungskennzahlen und/oder Instruktionssätze als Teil des, oder eines des, vorherigen Downlink-Leistungsvektordatensatzes (201) generiert werden.

6. Verfahren nach einem der vorangehenden Ansprüche, wobei bezüglich der spezifischen Internet-of-Things-Kommunikationsvorrichtung (20) und eines betrachteten Downlink-Leistungsvektordatensatzes (201) der anschließende Uplink-Leistungsvektordatensatz (202) entweder:
- einem Timer-ausgelösten Uplink-Leistungsvektordatensatz (202) entspricht oder
- einem Ereignis-ausgelösten Uplink-Leistungsvektordatensatz (202) entspricht,
wobei in dem Fall, dass der Uplink-Leistungsvektordatensatz (202) Timer-ausgelöst ist, das Timer-Intervall einem Timer-Intervall entspricht, das durch eine Leistungsvektordatensatz-Timer-Angabe definiert ist, die Teil des betrachteten Downlink-Leistungsvektordatensatzes (201) oder eines vorherigen Downlink-Leistungsvektordatensatzes (201) ist.

7. Verfahren nach einem der Ansprüche 5 und 6, wobei, in einem dritten Schritt vor dem ersten Schritt, das eindeutige Vorrichtungsprofil durch das Internet-of-Things-Leistungsmanagementsystem (500), insbesondere seinen Leistungsmanagementdienst (520), generiert oder erstellt wird, wobei insbesondere das eindeutige Vorrichtungsprofil mindestens eines von Folgendem umfasst:
den primären vertikalen oder Anwendungsfalltyp, den Vorrichtungshersteller und/oder das Vorrichtungsmodell, die Vorrichtungs-Softwareversion, die Vorrichtungs-Hardwareversion, den Hersteller und/oder das Modell des Drahtloskommunikationsmoduls, die Firmwareversion des Drahtloskommunikationsmoduls, die Hardwareversion des Drahtloskommunikationsmoduls, den Cloud-Anbieter, den Batteriehersteller und/oder das Batteriemodell, einschließlich der Leistungscharakteristiken, den Antennenhersteller und/oder das Antennenmodell, den Sensor- und/oder Aktuatorhersteller und/oder das Sensor- und/oder Aktuatormodell, den Hersteller und/oder das Modell des globalen Navigationssatellitensystems, die Kommunikationsprofil-bezogenen Leistungskennzahlen, die Funkzugangstechnologie-bezogenen Leistungskennzahlen, die Energiesparfunktionen-bezogenen Leistungskennzahlen und die Einsatzcharakteristik-bezogenen Leistungskennzahlen.

8. Verfahren nach einem der Ansprüche 6 und 7, wobei zwischen einem betrachteten Downlink-Leistungsvektordatensatz (201), der durch die spezifische Internet-of-Things-Kommunikationsvorrichtung (20) empfangen wird, und dem anschließenden Uplink-Leistungsvektordatensatz (202), der durch die spezifische Internet-of-Things-Kommunikationsvorrichtung (20) gesendet wird, insbesondere zwischen dem ersten Schritt und dem zweiten Schritt,
die spezifische Internet-of-Things-Kommunikationsvorrichtung (20), insbesondere ihre Leistungsmanagement-Clientfunktionalität (21), den Inhalt des betrachteten Downlink-Leistungsvektordatensatzes (201) verarbeitet und insbesondere eine Zeit gemäß der Leistungsvektordatensatz-Timer-Angabe einstellt und/oder eine Rekonfiguration von Teilen, Modulen oder Komponenten der Internet-of-Things-Kommunikationsvorrichtung (20) auslöst, wobei letztere insbesondere mindestens einen von Folgendem umfasst:
- eine Rekonfiguration des Chips oder der Funktionalität des globalen Satellitennavigationssystems,
- eine Modifikation von Sensoreigenschaften und/oder von Aktuatoreigenschaften,
- eine Modifikation der Kadenz von Sensormessungen und/oder Aktuatoraktivierungen,
- eine Modifikation des Stromverbrauchs von Komponenten, Systemen oder der gesamten Vorrichtung,
- eine Modifikation von Antennenabstimmkreisen, Anpassungskreisen und/oder Front-End-Schaltungen,
- eine Modifikation von Batteriekreisen und/oder Front-End-Schaltungen,
- eine Modifikation der Anwendungsnachrichtenstruktur,
- eine Modifikation der 3GPP^{™}-Energiesparfunktionseinstellungen,
- eine Modifikation der Betriebsfrequenzbänder,
- eine Modifikation von Netzerfassungsverfahrensweisen für 3GPP^{™} und/oder proprietäre Mechanismen, insbesondere in Bezug auf Scannen, Netzpräferenzen und Neuauswahl-Timer.

9. Verfahren nach einem der vorangehenden Ansprüche, wobei der Uplink-Leistungsvektordatensatz (202), der durch die spezifische Internet-of-Things-Kommunikationsvorrichtung (20) zu dem Internet-of-Things-Leistungsmanagementsystem (500), insbesondere seinem Leistungsmanagementdienst (520), gesendet wird, mindestens eines von Folgendem umfasst:
- eine Batterieleistungsmessgröße,
- die momentane Konfiguration des Chips oder der Funktionalität des globalen Satellitennavigationssystems,
- momentane Einstellungen von Sensor- und/oder Aktuatoreigenschaften,
- die momentane Kadenz von Sensormessungen und/oder von Aktuatoraktivierungen,
- die momentane Stromverbrauchskonfiguration von Komponenten, Systemen oder der gesamten Vorrichtung,
- die momentane Konfiguration von Antennenabstimmkreisen und Anpassungskreisen in intelligenten Antennenprodukten,
- die momentane Konfiguration der Batteriekreise,
- die momentane Konfiguration der Anwendungsnachrichtenstruktur,
- die momentane Konfiguration der 3GPP^{™}-Energiesparfunktionseinstellungen,
- Änderungen der Betriebsfrequenzbänder,
- Netzerfassungsverfahrensweisen für 3GPP^{™} und/oder proprietäre Mechanismen, insbesondere in Bezug auf Scannen, Netzpräferenzen und Neuauswahl-Timer,
- Positionsbestimmungs-/Installationsdaten für die Vorrichtung, falls geändert.

10. Verfahren nach einem der vorangehenden Ansprüche, wobei sowohl die Downlink-Leistungsvektordatensätze (201) als auch die Uplink-Leistungsvektordatensätze (202) zwischen der spezifischen Internet-of-Things-Kommunikationsvorrichtung (20) und dem Internet-of-Things-Leistungsmanagementsystem (500), insbesondere seinem Leistungsmanagementdienst (520), über einen Edge-Computing-Knoten (Edge Computing Node, ECN), insbesondere eine Basisstationsentität oder einen eNodeB oder eine Gateway-Entität oder einen oneM2M-Mittelknoten, und insbesondere, mindestens im Fall der Uplink-Leistungsvektordatensätze (202), back-to-back zur nächsten regulär geplanten App-Nachricht in Uplink-Richtung gesendet werden.

11. System zum Betreiben eines Internet-of-Things-Systems (200), insbesondere eines Internet-of-Things-Leistungsmanagementsystems (500), wobei das Internet-of-Things-System (200) mehrere Internet-of-Things-Kommunikationsvorrichtungen (20) in einem Kommunikationsnetz (100) umfasst, das eine Funkversorgung in einem zuvor festgelegten geographischen Gebiet (120) bereitstellt, und das Internet-of-Things-System (200) - mittels der Übertragung von Internet-of-Things-Nutzdaten von den jeweiligen Internet-of-Things-Kommunikationsvorrichtungen (20) zu dem Kommunikationsnetz (100) und/oder von dem Kommunikationsnetz (100) zu den jeweiligen Internet-of-Things-Kommunikationsvorrichtungen (20) - einen Internet-of-Things-Dienst bereitstellt,
wobei jede der Internet-of-Things-Kommunikationsvorrichtungen (20) eine Leistungsmanagement-Clientfunktionalität (21) umfasst und gemäß Konfigurationsinformationen eines jeweiligen Leistungsvektordatensatzes (201, 202) arbeitet,
wobei der Leistungsvektordatensatz (201, 202) an die Internet-of-Things-Kommunikationsvorrichtung (20) bzw. an ihre jeweilige Umgebung oder Situation angepasst ist und/oder iterativ angepasst wird oder iterativ angepasst werden kann,
wobei, um eine spezifische Internet-of-Things-Kommunikationsvorrichtung (20) zu betreiben, das System oder das Internet-of-Things-Leistungsmanagementsystem (500) so eingerichtet ist, dass:
- ein erster Downlink-Leistungsvektordatensatz (201), ausgelöst durch das Internet-of-Things-Leistungsmanagementsystem (500), zu der spezifischen Internet-of-Things-Kommunikationsvorrichtung (20) gesendet wird,
- ein erster Uplink-Leistungsvektordatensatz (202), durch die spezifische Internet-of-Things-Kommunikationsvorrichtung (20), zu dem Internet-of-Things-Leistungsmanagementsystem (500) gesendet wird,
wobei der erste Uplink-Leistungsvektordatensatz (202) Leistungsrückmeldungsinformationen bezüglich der spezifischen Internet-of-Things-Kommunikationsvorrichtung (20) und ihren Betrieb umfasst,
wobei das System so eingerichtet ist, dass mindestens ein zweiter Downlink-Leistungsvektordatensatz (201), ausgelöst durch das Internet-of-Things-Leistungsmanagementsystem (500), zu der spezifischen Internet-of-Things-Kommunikationsvorrichtung (20) gesendet wird, wobei der zweite Downlink-Leistungsvektordatensatz (201) im Vergleich zu dem ersten Downlink-Leistungsvektordatensatz (201) andere Konfigurationsinformationen umfasst.

12. Internet-of-Things-Kommunikationsvorrichtung (20) zum Betreiben als Teil eines Internet-of-Things-Systems (200), die insbesondere ein Internet-of-Things-Leistungsmanagementsystem (500) umfasst oder zu einem solchen in Beziehung steht, wobei das Internet-of-Things-System (200) mehrere Internet-of-Things-Kommunikationsvorrichtungen (20) in einem Kommunikationsnetz (100) umfasst, das eine Funkversorgung in einem zuvor festgelegten geographischen Gebiet (120) bereitstellt, und das Internet-of-Things-System (200) - mittels der Übertragung von Internet-of-Things-Nutzdaten von den jeweiligen Internet-of-Things-Kommunikationsvorrichtungen (20) zu dem Kommunikationsnetz (100) und/oder von dem Kommunikationsnetz (100) zu den jeweiligen Internet-of-Things-Kommunikationsvorrichtungen (20) - einen Internet-of-Things-Dienst bereitstellt,
wobei die Internet-of-Things-Kommunikationsvorrichtung (20) eine Leistungsmanagement-Clientfunktionalität (21) umfasst und gemäß Konfigurationsinformationen eines jeweiligen Leistungsvektordatensatzes (201, 202) arbeitet, wobei der Leistungsvektordatensatz (201, 202) an die Internet-of-Things-Kommunikationsvorrichtung (20) und ihre Umgebung oder Situation angepasst ist und/oder iterativ angepasst wird oder iterativ angepasst werden kann,
wobei die Internet-of-Things-Kommunikationsvorrichtung (21) so eingerichtet ist, dass:
- ein erster Downlink-Leistungsvektordatensatz (201) durch die Internet-of-Things-Kommunikationsvorrichtung (20) von dem Internet-of-Things-Leistungsmanagementsystem (500) empfangen wird,
- ein erster Uplink-Leistungsvektordatensatz (202), durch die spezifische Internet-of-Things-Kommunikationsvorrichtung (20), zu dem Internet-of-Things-Leistungsmanagementsystem (500) gesendet wird,
wobei der erste Uplink-Leistungsvektordatensatz (202) Leistungsrückmeldungsinformationen bezüglich der spezifischen Internet-of-Things-Kommunikationsvorrichtung (20) und ihren Betrieb umfasst,
wobei mindestens ein zweiter Downlink-Leistungsvektordatensatz (201) dafür eingerichtet ist, ausgelöst durch das Internet-of-Things-Leistungsmanagementsystem (500), zu der spezifischen Internet-of-Things-Kommunikationsvorrichtung (20) gesendet zu werden, wobei der zweite Downlink-Leistungsvektordatensatz (201) im Vergleich zu dem ersten Downlink-Leistungsvektordatensatz (201) andere Konfigurationsinformationen umfasst.

13. Programm, umfassend einen computerlesbaren Programmcode, der, wenn er auf einem Computer oder in einer Internet-of-Things-Kommunikationsvorrichtung (20) und/oder in einer Leistungsmanagement-Clientfunktionalität (21) und/oder in einem Internet-of-Things-Leistungsmanagementsystem (500) oder einer Entität oder einem Knoten davon, insbesondere einem intelligenten Optimierungsalgorithmus (510) und/oder einem Leistungsmanagementdienst (520) davon, ausgeführt wird, den Computer oder die Internet-of-Things-Kommunikationsvorrichtung (20) und/oder die Leistungsmanagement-Clientfunktionalität (21) und/oder das Internet-of-Things-Leistungsmanagementsystem (500) oder eine Entität oder einen Knoten davon, insbesondere den intelligenten Optimierungsalgorithmus (510) und/oder den Leistungsmanagementdienst (520) davon, veranlasst, ein Verfahren nach einem der Ansprüche 1 bis 10 durchzuführen.

14. Computerlesbares Medium, umfassend Instruktionen, die, wenn sie auf einem Computer oder in einer Internet-of-Things-Kommunikationsvorrichtung (20) und/oder in einer Leistungsmanagement-Clientfunktionalität (21) und/oder in einem Internet-of-Things-Leistungsmanagementsystem (500) oder einer Entität oder einem Knoten davon, insbesondere einem intelligenten Optimierungsalgorithmus (510) und/oder einem Leistungsmanagementdienst (520) davon, ausgeführt werden, den Computer oder die Internet-of-Things-Kommunikationsvorrichtung (20) und/oder die Leistungsmanagement-Clientfunktionalität (21) und/oder das Internet-of-Things-Leistungsmanagementsystem (500) oder eine Entität oder einen Knoten davon, insbesondere den intelligenten Optimierungsalgorithmus (510) und/oder den Leistungsmanagementdienst (520) davon, veranlassen, ein Verfahren nach einem der Ansprüche 1 bis 10 durchzuführen.

## Revendications

1. Procédé pour faire fonctionner un système de l'internet des objets (200) utilisant un système de gestion des performances de l'internet des objets (500), dans lequel le système de l'internet des objets (200) comprend une pluralité de dispositifs de communication de l'internet des objets (20) dans un réseau de communication (100) qui fournit une couverture radio dans une zone géographique prédéterminée (120), et - au moyen de la transmission de données utiles de l'internet des objets depuis les dispositifs de communication de l'internet des objets (20), respectivement, vers le réseau de communication (100) et/ou depuis le réseau de communication (100) vers les dispositifs de communication de l'internet des objets (20), respectivement - le système de l'internet des objets (200) fournit un service de l'internet des objets,
dans lequel chacun des dispositifs de communication de l'internet des objets (20) comprend une fonctionnalité client de gestion des performances (21) et fonctionne selon les informations de configuration d'un jeu de données vectorielles de performance respectif (201, 202),
dans lequel le jeu de données vectorielles de performance (201, 202) est adapté au dispositif de communication de l'internet des objets (20), respectivement, et à son environnement ou à sa situation respectifs et/ou est adapté de manière itérative ou peut être adapté de manière itérative,
dans lequel, afin de faire fonctionner un dispositif de communication spécifique de l'internet des objets (20), le procédé comprend les étapes consistant à :
- dans une première étape, transmettre un premier jeu de données vectorielles de performance de liaison descendante (201) déclenché par le système de gestion des performances de l'internet des objets (500), vers le dispositif de communication spécifique de l'internet des objets (20),
- dans une deuxième étape, transmettre un premier jeu de données vectorielles de performance de liaison montante (202), par le dispositif de communication spécifique de l'internet des objets (20), vers le système de gestion des performances de l'internet des objets (500),
dans lequel le premier jeu de données vectorielles de performance de liaison montante (202) comprend des informations de retour de performance concernant le dispositif de communication spécifique de l'internet des objets (20) et son fonctionnement,
dans lequel au moins un deuxième jeu de données vectorielles de performance de liaison descendante (201) est transmis, déclenché par le système de gestion des performances de l'internet des objets (500), vers le dispositif de communication spécifique de l'internet des objets (20), dans lequel le deuxième jeu de données vectorielles de performance de liaison descendante (201) comprend, par rapport au premier jeu de données vectorielles de performance de liaison descendante (201), des informations de configuration différentes.

2. Procédé selon la revendication 1, dans lequel, pour déterminer les informations de configuration différentes du deuxième jeu de données vectorielles de performance de liaison descendante (201), le système de gestion des performances de l'internet des objets (500), et en particulier un algorithme d'optimisation intelligent (510) et/ou un service de gestion des performances (520) de celui-ci, prend en compte les informations de retour de performance du premier jeu de données vectorielles de performance de liaison montante (202).

3. Procédé selon l'une des revendications précédentes, dans lequel les informations de configuration différentes, en particulier par rapport au premier jeu de données vectorielles de performance de liaison descendante (201), du deuxième jeu de données vectorielles de performance de liaison descendante ou d'un jeu de données vectorielles de performance de liaison descendante suivant (201) sont obtenues au moyen du système de gestion des performances de l'internet des objets (500), en particulier de son service de gestion des performances (520), en utilisant au moins l'un des moyens suivants :
- le système de gestion des performances de l'internet des objets (500), en particulier son service de gestion des performances (520), partage le premier jeu de données vectorielles de performance de liaison montante ou le suivant (202), reçu dans la deuxième étape à partir du dispositif de communication spécifique de l'internet des objets (20), avec des systèmes dorsaux, en particulier pour des métriques d'indicateurs clés de performance et/ou l'enregistrement d'événements de transaction,
- le système de gestion des performances de l'internet des objets (500), en particulier son service de gestion des performances (520), obtient des données à partir de sources de données externes (503, 504, 505), en particulier d'au moins une source parmi des outils de prédiction de couverture (503), des profils régionaux (504) et des profils de réseau (505),
- le système de gestion des performances de l'internet des objets (500), en particulier son service de gestion des performances (520), fournit ces données à l'algorithme d'optimisation intelligent (510),
- l'algorithme d'optimisation intelligent (510) exécute une simulation de prédiction par modélisation de jumeaux virtuels et modélise un nouveau jeu de données vectorielles de performance de liaison descendante (201) .

4. Procédé selon l'une des revendications 2 ou 3, dans lequel, pour déterminer - par le système de gestion des performances de l'internet des objets (500), et en particulier son algorithme d'optimisation intelligent (510) - les informations de configuration du deuxième jeu de données vectorielles de performance de liaison descendante (201), au moins une des sources de données suivantes est ou sont prise(s) en considération, en plus de la prise en considération des informations de retour de performance du premier jeu de données vectorielles de performance de liaison montante (202) :
- bibliothèque de profils de projets de l'internet des objets (501), comprenant en particulier des données de projets de jumeaux virtuels et/ou un catalogue de jumeaux numériques organisés par solution de l'internet des objets ou par verticale de l'internet des objets,
- bibliothèque de profils de dispositifs de l'internet des objets (502),
- sources de données externes (503, 504, 505), en particulier au moins une source parmi des outils de prédiction de couverture (503), des profils régionaux (504) et des profils de réseau (505).

5. Procédé selon l'une des revendications précédentes, dans lequel, en ce qui concerne le dispositif de communication spécifique de l'internet des objets (20), le premier jeu de données vectorielles de performance de liaison descendante et/ou le suivant (201) est ou correspond à un profil de dispositif unique, en particulier stocké dans la bibliothèque de profils de dispositifs de l'internet des objets (502), et/ou dans lequel, de même, en ce qui concerne le dispositif de communication spécifique de l'internet des objets (20), le premier jeu de données vectorielles de performance de liaison montante et/ou le suivant (202) comprend ou ses données sont dérivées de ou générées en fonction d'indicateurs clés de performance spécifiques au dispositif et/ou de jeux d'instructions dans le cadre du ou de l'un des jeux de données vectorielles de performance de liaison descendante précédents (201).

6. Procédé selon l'une des revendications précédentes, dans lequel, en ce qui concerne le dispositif de communication spécifique de l'internet des objets (20) et un jeu de données vectorielles de performance de liaison descendante considéré (201), le jeu de données vectorielles de performance de liaison montante suivant (202) correspond soit à
- un jeu de données vectorielles de performance de liaison montante déclenché par minuteur (202), soit à
- un jeu de données vectorielles de performance de liaison montante déclenché par événement (202),
dans lequel, si le jeu de données vectorielles de performance de liaison montante (202) est déclenché par minuteur, l'intervalle de minuteur correspond à un intervalle de minuteur défini par une indication de minuteur de jeu de données vectorielles de performance faisant partie du jeu de données vectorielles de performance de liaison descendante considéré (201) ou d'un jeu de données vectorielles de performance de liaison descendante précédent (201).

7. Procédé selon l'une des revendications 5 ou 6, dans lequel, dans une troisième étape précédant la première étape, le profil de dispositif unique est généré ou créé par le système de gestion des performances de l'internet des objets (500), en particulier son service de gestion des performances (520), dans lequel, en particulier, le profil de dispositif unique comprend au moins l'un des éléments suivants :
le type verticale primaire ou cas d'utilisation, le fabricant et/ou le modèle du dispositif, la version du logiciel du dispositif, la version du matériel du dispositif, le fabricant et/ou le modèle du module de communication sans fil, la version du micrologiciel du module de communication sans fil, la version du matériel du module de communication sans fil, le fournisseur de services de cloud, le fabricant et/ou le modèle de la batterie, y compris les caractéristiques de performance, le fabricant et/ou le modèle de l'antenne, le fabricant et/ou le modèle du capteur et/ou de l'actionneur, le fabricant et/ou le modèle du système mondial de navigation par satellites, les indicateurs clés de performance liés au profil de communication, les indicateurs clés de performance liés à la technologie d'accès radio, les indicateurs clés de performance liés aux fonctions d'économie d'énergie et les indicateurs clés de performance liés aux caractéristiques de déploiement.

8. Procédé selon l'une des revendications 6 ou 7, dans lequel, entre un jeu de données vectorielles de performance de liaison descendante considéré (201) reçu par le dispositif de communication spécifique de l'internet des objets (20) et le jeu de données vectorielles de performance de liaison montante suivant (202) transmis par le dispositif de communication spécifique de l'internet des objets (20), en particulier entre la première étape et la deuxième étape, le dispositif de communication spécifique de l'internet des objets (20), en particulier sa fonctionnalité client de gestion des performances (21), traite le contenu du jeu de données vectorielles de performance de liaison descendante considéré (201), et en particulier fixe un temps en fonction de l'indication de minuteur de jeu de données vectorielles de performance et/ou déclenche une reconfiguration de parties, modules ou composants du dispositif de communication de l'internet des objets (20), cette dernière comprenant en particulier au moins l'une des actions suivantes :
- une reconfiguration de la puce ou de la fonctionnalité de système mondial de navigation par satellites,
- une modification des propriétés des capteurs et/ou des propriétés des actionneurs,
- une modification de la cadence des lectures des capteurs et/ou des activations des actionneurs,
- une modification de la consommation d'énergie des composants, des systèmes ou de l'ensemble du dispositif,
- une modification des circuits d'accord d'antenne, des circuits d'adaptation et/ou des circuits frontaux,
- une modification des circuits de batterie et/ou des circuits frontaux,
- une modification de la structure des messages d'application,
- une modification des paramètres de la fonction d'économie d'énergie 3GPP^{™},
- une modification des bandes de fréquences de fonctionnement,
- une modification des procédures d'acquisition de réseau pour les mécanismes 3GPP^{™} et/ou propriétaires, en particulier en ce qui concerne le balayage, les préférences de réseau, les délais de resélection.

9. Procédé selon l'une des revendications précédentes, dans lequel le jeu de données vectorielles de performance de liaison montante (202) transmis par le dispositif de communication spécifique de l'internet des objets (20) au système de gestion des performances de l'internet des objets (500), en particulier à son service de gestion des performances (520), comprend au moins l'un des éléments suivants :
- une métrique de performance de la batterie,
- la configuration actuelle de la puce ou de la fonctionnalité de système mondial de navigation par satellites,
- les paramètres actuels des propriétés des capteurs et/ou des actionneurs,
- la cadence actuelle des lectures des capteurs et/ou des activations des actionneurs,
- la configuration actuelle de la consommation d'énergie des composants, des systèmes ou de l'ensemble du dispositif,
- la configuration actuelle des circuits d'accord d'antenne, des circuits d'adaptation dans les antennes intelligentes,
- la configuration actuelle des circuits de batterie
- la configuration actuelle de la structure des messages d'application,
- la configuration actuelle des paramètres de la fonction d'économie d'énergie 3GPP^{™},
- les modifications apportées aux bandes de fréquences de fonctionnement,
- les procédures d'acquisition de réseau pour les mécanismes 3GPP^{™} et/ou propriétaires, en particulier en ce qui concerne le balayage, les préférences de réseau, les délais de resélection,
- les données de positionnement / d'installation du dispositif, si elles ont été modifiées.

10. Procédé selon l'une des revendications précédentes, dans lequel les jeux de données vectorielles de performance de liaison descendante (201) et les jeux de données vectorielles de performance de liaison montante (202) sont transmis, entre le dispositif de communication spécifique de l'internet des objets (20) et le système de gestion des performances de l'internet des objets (500), en particulier son service de gestion des performances (520), par l'intermédiaire d'un noeud informatique périphérique, ECN, en particulier une entité station de base ou un eNodeB ou une entité passerelle ou un noeud intermédiaire oneM2M, et en particulier, au moins dans le cas des jeux de données vectorielles de performance de liaison montante (202), à la suite du prochain message d'application régulièrement programmé dans le sens de la liaison montante.

11. Système pour faire fonctionner un système de l'internet des objets (200), en particulier système de gestion des performances de l'internet des objets (500), dans lequel le système de l'internet des objets (200) comprend une pluralité de dispositifs de communication de l'internet des objets (20) dans un réseau de communication (100) qui fournit une couverture radio dans une zone géographique prédéterminée (120), et - au moyen de la transmission de données utiles de l'internet des objets depuis les dispositifs de communication de l'internet des objets (20), respectivement, vers le réseau de communication (100) et/ou depuis le réseau de communication (100) vers les dispositifs de communication de l'internet des objets (20), respectivement - le système de l'internet des objets (200) fournit un service de l'internet des objets,
dans lequel chacun des dispositifs de communication de l'internet des objets (20) comprend une fonctionnalité client de gestion des performances (21) et fonctionne selon les informations de configuration d'un jeu de données vectorielles de performance respectif (201, 202),
dans lequel le jeu de données vectorielles de performance (201, 202) est adapté au dispositif de communication de l'internet des objets (20), respectivement, et à son environnement ou à sa situation respectifs et/ou est adapté de manière itérative ou peut être adapté de manière itérative,
dans lequel, afin de faire fonctionner un dispositif de communication spécifique de l'internet des objets (20), le système ou le système de gestion des performances de l'internet des objets (500) est configuré de telle sorte que :
- un premier jeu de données vectorielles de performance de liaison descendante (201) est transmis, déclenché par le système de gestion des performances de l'internet des objets (500), vers le dispositif de communication spécifique de l'internet des objets (20),
- un premier jeu de données vectorielles de performance de liaison montante (202) est transmis, par le dispositif de communication spécifique de l'internet des objets (20), vers le système de gestion des performances de l'internet des objets (500),
dans lequel le premier jeu de données vectorielles de performance de liaison montante (202) comprend des informations de retour de performance concernant le dispositif de communication spécifique de l'internet des objets (20) et son fonctionnement,
dans lequel le système est configuré de telle sorte qu'au moins un deuxième jeu de données vectorielles de performance de liaison descendante (201) est transmis, déclenché par le système de gestion des performances de l'internet des objets (500), vers le dispositif de communication spécifique de l'internet des objets (20), dans lequel le deuxième jeu de données vectorielles de performance de liaison descendante (201) comprend, par rapport au premier jeu de données vectorielles de performance de liaison descendante (201), des informations de configuration différentes.

12. Dispositif de communication de l'internet des objets (20) destiné à fonctionner dans le cadre d'un système de l'internet des objets (200), comprenant en particulier un système de gestion des performances de l'internet des objets (500) ou s'y rapportant, dans lequel le système de l'internet des objets (200) comprend une pluralité de dispositifs de communication de l'internet des objets (20) dans un réseau de communication (100) qui fournit une couverture radio dans une zone géographique prédéterminée (120), et - au moyen de la transmission de données utiles de l'internet des objets depuis les dispositifs de communication de l'internet des objets (20), respectivement, vers le réseau de communication (100) et/ou depuis le réseau de communication (100) vers les dispositifs de communication de l'internet des objets (20), respectivement - le système de l'internet des objets (200) fournit un service de l'internet des objets,
dans lequel le dispositif de communication de l'internet des objets (20) comprend une fonctionnalité client de gestion des performances (21) et fonctionne selon les informations de configuration d'un jeu de données vectorielles de performance respectif (201, 202), dans lequel le jeu de données vectorielles de performance (201, 202) est adapté au dispositif de communication de l'internet des objets (20) et à son environnement ou à sa situation et/ou est adapté de manière itérative ou peut être adapté de manière itérative,
dans lequel le dispositif de communication de l'internet des objets (20) est configuré de telle sorte que :
- un premier jeu de données vectorielles de performance de liaison descendante (201) est reçu, par le dispositif de communication de l'internet des objets (20), du système de gestion des performances de l'internet des objets (500),
- un premier jeu de données vectorielles de performance de liaison montante (202) est transmis, par le dispositif de communication spécifique de l'internet des objets (20), vers le système de gestion des performances de l'internet des objets (500),
dans lequel le premier jeu de données vectorielles de performance de liaison montante (202) comprend des informations de retour de performance concernant le dispositif de communication spécifique de l'internet des objets (20) et son fonctionnement,
dans lequel au moins un deuxième jeu de données vectorielles de performance de liaison descendante (201) est configuré pour être transmis, déclenché par le système de gestion des performances de l'internet des objets (500), vers le dispositif de communication spécifique de l'internet des objets (20), dans lequel le deuxième jeu de données vectorielles de performance de liaison descendante (201) comprend, par rapport au premier jeu de données vectorielles de performance de liaison descendante (201), des informations de configuration différentes.

13. Programme comprenant un code de programme lisible par ordinateur qui, lorsqu'il est exécuté sur un ordinateur ou sur un dispositif de communication de l'internet des objets (20) et/ou sur une fonctionnalité client de gestion des performances (21) et/ou sur un système de gestion des performances de l'internet des objets (500) ou sur une entité ou un noeud de celui-ci, en particulier un algorithme d'optimisation intelligent (510) et/ou un service de gestion des performances (520) de celui-ci, amène l'ordinateur ou le dispositif de communication de l'internet des objets (20) et/ou la fonctionnalité client de gestion des performances (21) et/ou le système de gestion des performances de l'internet des objets (500) ou une entité ou un noeud de celui-ci, en particulier l'algorithme d'optimisation intelligent (510) et/ou le service de gestion des performances (520) de celui-ci, à mettre en oeuvre un procédé selon l'une des revendications 1 à 10.

14. Support lisible par ordinateur comprenant des instructions qui, lorsqu'elles sont exécutées sur un ordinateur ou sur un dispositif de communication de l'internet des objets (20) et/ou sur une fonctionnalité client de gestion des performances (21) et/ou sur un système de gestion des performances de l'internet des objets (500) ou sur une entité ou un noeud de celui-ci, en particulier un algorithme d'optimisation intelligent (510) et/ou un service de gestion des performances (520) de celui-ci, amènent l'ordinateur ou le dispositif de communication de l'internet des objets (20) et/ou la fonctionnalité client de gestion des performances (21) et/ou le système de gestion des performances de l'internet des objets (500) ou une entité ou un noeud de celui-ci, en particulier l'algorithme d'optimisation intelligent (510) et/ou le service de gestion des performances (520) de celui-ci, à mettre en oeuvre un procédé selon l'une des revendications 1 à 10.
